# EUROPÄISCHE PATENTSCHRIFT

(11) **EP 0 912 339 B1**
(45) Veröffentlichungstag und Bekanntmachung des Hinweises auf die Patenterteilung: **24.10.2001**
(21) Anmeldenummer: 97920736.2
(22) Anmeldetag: 22.04.1997
(51) Int. Cl.: B32B 27/08, B65D 65/40

(54) **TRANSPARENTE, SIEGELBARE MEHRSCHICHTENBARRIEREFOLIEN**
TRANSPARENT SEALABLE MULTI-LAYER BARRIER FILMS
FEUILLES D'ARRET MULTICOUCHES SCELLABLES TRANSPARENTES

(30) Priorität: 06.05.1996 DE 19618111
(43) Veröffentlichungstag der Anmeldung: 06.05.1999
(73) Patentinhaber: Convenience Food Systems B.V., 5760 AA Bakel (NL)
(72) Erfinder: REINERS, Ulrich, NL-5802 BC Venray (NL); JACCOUD, Bertrand, 1678 Siviriez (CH); GOLDING, Barry, B-3080 Tervuren (BE)
(74) Vertreter: Kutzenberger, Helga, Dr.
(86) Internationale Anmeldenummer: EP9702030
(87) Internationale Veröffentlichungsnummer: WO9742029

(56) Entgegenhaltungen:
- EP-A- 0 311 432
- EP-A- 0 505 575
- EP-A- 0 624 460
- DE-A- 3 300 411
- DE-A- 4 130 538
- US-A- 5 085 904

## Beschreibung

Die vorliegende Erfindung betrifft eine siegelbare Mehrschichtenbarrierenfolie mit einer hervorragenden Bruchfestigkeit, einer hohen Transparenz und einem guten Hot Tack, was wichtig ist um die Foilie als Schlauchbeutelfolie einsetzen zu können. Darüberhinaus verfügt die Folie über eine excellente Reißfestigkeit.

In der Lebensmittelindustrie werden verderbliche Produkte wie beispielsweise Frischfleisch, Schinken, Wurst und die daraus hergestellten Erzeugnisse in sogenannten Barrierefolien verpackt. Diese Lebensmittel werden dann entweder in einer definierten Gasatmosphäre (MAP-packages=**M**odified **A**tmosphere **P**ackages) oder aber in Vakuum (Vakuumpackungen) verpackt. Bei der MAP-Packung wird die Umgebungsluft produktabhängig durch unterschiedliche Gamischungen ersetzt. Typische Beispiele von Gaszusammensetzungen sind für Frischfleisch CO₂/O₂-Mischungen und für Würste Gasmischungen aus CO₂ und N₂.
Dementsprechend müssen die Folien als Verpackungsmaterial eingesetzt werden, die Barriereeigenschaften gegenüber den oben genannten Gasen aufweisen.

Um die verpackten Waren im Läden in vertikalen Regalen anbieten zu können, müssen die Verpackungen darüberhinaus über eine Aufhängngsvorrichtung (Loch) in dem Siegelnahtbereich verfügen.

Es gibt eine Vielzahl von Folien mit Barriereeigenschaften. Seit langem bekannt sind Folien mit dem prinzipiellen Aufbau: Polyamid (PA)/Ethylenvinylalkohol (EVOH)/Polyethylen (PE) oder Polystyrol (PS)/ Ethylenvinylalkohol (EVOH)/Polyethylen (PE) oder Polyesterterephtalat (PET)/ Polyvinylidenchlorid (PVDC)/ Polyethylen (PE). Der Nachteil dieser Folien besteht darin, daß sie oftmals Chlorid-Moleküle beinhalten und nicht über eine ausreichende Transparenz verfügen.

Darüberhinaus sind noch Folien mit Barriereeigenschaften bekannt, bei denen die Barriereschicht aus einem Metall oder einem Halbmetall besteht.

Dieses Metall- oder Halbmetall wird zum Beispiel auf eine Trägerfolie als dünne Schicht aufgetragen, indem diese Folie einem elektrischen Feld, Druck und einer Atmosphäre, die besagtes Metal oder Halbmetal beinhaltet, ausgesetzt wird(EP-B-516 804).

Eine andere Methode die Trägerfolie mit den Metallen oder Halbmetallen zu beschichten wird in der europäischen Patentanmeldung 469 926 offenbart. In einer zunächst evakuierten Kammer wird das Metall oder Halbmetall mittels einer Lichtbogenentladung von einem strömenden Gas auf die Trägerfolie appliziert. Der Gas enthält eine dampfförmige Organosiliziumverbindung, eine Sauerstoffkomponente und ein Inertgas.

Aus der europäischen Patentanmeldung 385 054 ist eine Barrierefolie, die als Aroma- und Gasbarriere dient, bekannt. Diese Folie enthält zwei Sperrschichten, die aus Siliziumdioxid bestehen. Dadurch, daß die Barrierefolie jedoch zwei Sperrschichten enthält, ist ihre Herstellung aufwendig und es mangelt der Barrierefolie an Transparenz und Farbneutralität.

In der europäischen Patentanmeldung 622 181 wird eine Barrierefolie offengelegt, die aus einer Sperrschicht und sechs anderen Schichten besteht. Die Sperrschicht beinhaltet anorganische Substanzen wie SiOₓ oder Al_{y}O_{z}.
Durch die große Anzahl an Schichten ist diese Folie jedoch relativ dick und deshalb ist sie auf einer horizontalen Schlauchbeutelmaschine schlecht zu verarbeiten. Ferner ist die Folie auch noch unflexibel, was sich ebenfalls als nachteilig bei Schlauchbeutelverpackungen herausgestellt hat.

Aus der europäischen Patentanmeldung 545 856 ist eine Barrierefolie für Verpackungen bekannt, die zumindest zwei Kunststoffschichten und eine Sperrschicht aus einem Metall oder Halbmetal beinhaltet.
Ein bedeutendes Merkmal dieser Folie ist, daß die beiden Kunststoffschichten aus demselben Kunststoffmaterial wie zum Beispiel aus Polyolefinen, Polyestern oder Polyamiden gefertigt sein müssen.
Eine symetrisch aufgebaute Folie der allgemeinen Struktur A/B/A hat jedoch immer den Nachteil, daß durch die Thermoeigenschaften der äußeren Kunststoffschichten Probleme bei der Siegelung auftreten. Speziell symetrisch aufgebaute Folien, die Polyesterterephtalat (PETP) enthalten, haben keinen Hot Tack, auch wenn amorphes PETP verwendet wird. Symetrisch aufgebaute Folien aus Polyamid können bei tiefen Temperaturen überhaupt nicht gesiegelt werden. Symetrische Folien aus Polyethylene haben hingegen schlechte mechanische Eigenschaften wie zum Beispiel Durchstechfestigkeit oder Steifigkeit.

In der WO 93/12923 wird das Herstellungsverfahren eines Verpackungsmaterials offenbart. Das Verpackungsmaterial besteht aus einer Trägerschicht, einer Sperrschicht aus Siliziumdioxid und einer Siegelschicht, die miteinander laminiert sind. Der Trägerfilm besteht aus Polyethylen, Polypropylen oder Polyester und für die Siegelschicht können Materialien wie Polyethylen, Polypropylen, ein Ethylen/Vinylacetat Copolymeres oder lonomere eingesetzt werden. Gemäß diesem Herstellungsverfahren wird die thermoplastische Siegelschicht durch Extrusionsbeschichtung auf die Siliziumdioxidschicht aufgetragen, wobei die Dicke der Siegelschicht pro Beschichtungsvorgang 30 µm nicht überschreiten darf. Falls eine größere Dicke als 30 µm gewünscht wird, muß der Beschichtungsvorgang mehrmals wiederholt werden, was das Herstellungsverfahren aufwendig gestaltet. Darüberhinaus verfügt die Folie nicht über eine befriedigende Transparenz.

Der vorliegenden Erfindung liegt deshalb die Aufgabe zugrunde eine mehrschichtige, siegelbare, flexible, chlorfreie, leicht herstellbare Barrierefolie zu entwickeln, die eine verbesserte Transparenz und eine excellente Bruch- und Reißfestigkeit hat und die als Verpackungsmaterial für verderbliche Lebensmittel speziell für Wurst eingesetzt werden kann.

Gelöst wird diese Aufgabe durch die erfindungsgemäße Bereitstellung einer Mehrschichtenbarrierefolie mit der folgenden Sequenz von Schichten:
a) eine Trägerschicht aus Polyamid,
b) eine Sperrschicht aus einem Halbmetalloxid,
c) eine Haftvermittlerschicht,
d) eine Schicht aus Polyethylen niederer Dichte (LDPE),
e) eine Haftvermittlerschicht,
f) eine Siegelschicht aus einem lonomer-Polymeren.

Die Schichten (d) und (e) können gegebenenfalls eingefügt werden, um die Menge an lonomer-Polymerem, das für die Siegelschicht benötigt wird, zu reduzieren.

Das Polyamid für die Trägerschicht ist, gemäß der vorliegenden Erfindung, zum Beispiel ein Polyamid 6 (Polycaprolactam); Polyamid 11, Polyamid 12, (Polylaurinlactam); Polyamid 6,6, (Polyhexamethylenadinsäure); Polyamid 6,10, (Polyhexamethylensebacinsäure); polyamid 6,12, (Polyhexamethylenedodecanamid); oder Polyamid 6-3-T, (Polytrimethylenhexamethylenterephthalamid) oder eine Mischung der genannten Polyamiden.

Das Polyamid ist ein nichtorientiertes Polyamid, vorzugsweise ein Polyamid 6 oder Polyamid 6,6 mit einer Dichte zwischen vorzugsweise 1.0 und 1.2 g/cm³ und einem Schmelzindex zwischen vorzugsweise 210 und 225 °C. Die maximale Zugfestigkeit σ_{R} sollte vorzgsweise im Bereich zwischen 20-85, besonders bevorzugt zwischen 60-80N/mm² und der Widerstand gegen Weiterreißen im Bereich zwischen 50-80 N/mm² liegen.

Die Trägerschicht (a) wird mit einem Halbmetall beschichtet. Das bevorzugte Halbmetall ist Siliziumdioxid der allgemeinen Formel SiOₓ, wobei x zwischen 1,2 und 2,0 liegen sollte. Das SiOₓ wird auf eine Seite der Trägerschicht appliziert und sollte eine Dicke zwischen vorzugsweise 10 und 50 nm haben.

Die gemeinsame Dicke der Trägerschicht (a) und der Sperrschicht (b) liegt im Bereich zwischen 10 und 30 µm, wobei eine Dicke von 15 bis 20 µm bevorzugt wird.

Die Schichten (a) und (b) werden mit der nächstfolgenden Schicht durch eine Haftvermittlerschicht (c) verbunden. Passende Kaschierklebstoffe sind die aus dem Stand der Tehnik bekannten auf Acrylat oder Polyurethan basierenden Kaschierklebstoffe, wobei lösemittelfreie Kaschierklebstoffe bevorzugt werden. Die Kaschierklebstoffe werden in einer Menge zwischen 1,5 und 4 g/m² aufgetragen. Die Dicke der Haftvermittlerschicht kann zwischen 1 und 6 µm betragen, wobei eine Dicke zwischen 1,5 und 2,5 µm bevorzugt wird.

Da einerseits für die Siegelschicht eine gewisse Dicke benötigt wird und andererseits lonomer-Polymere relativ teuer sind, können wahlweise eine LDPE-Schicht (d) und eine Haftvermittlerschicht (e) in die erfindungsgemäße Mehrschichtbarrierefolie eingefügt werden, um die benötigte lonomer-Polymer Menge, die für die Siegelschicht benötigt wird, zu reduzieren.

Das in Schicht (d) eingesetzte Polyethylen niederer Dichte (LDPE) sollte eine Dichte zwischen 0,9225 und 0,9335 g/cm³ aufweisen. Der Schmelzindex sollte in einem Bereich zwischen 0,5 und 8,0 g/10 min, vorzugsweise zwischen 1 und 3 g/10 min (gemessen nach ASTM D 1238) liegen.

Als Haftvermittlerschicht zwischen der LDPE- und der lonomer-Polymer Schicht sollte vorzugsweise ein mit Maleinsäureanhydrid gepfropftes Polyethylen verwendet werden.

Die Siegelschicht ist erfindungsgemäß eine lonomer-Polymer Siegelschicht. Typische lonomer-Polymere sind zum Beispiel Copolymere eines Olefins und eines Monomeren, das eine Carboxylgruppe enthält. Das Carboxylgruppen haltige Polyolefin kann in einer Mischung mit einer metallischen Substanz eingesetzt werden, wobei die metallische Substanz in einem Bereich zwischen 20 und 100 Gew.-% zu dem Carboxylgruppen haltigen Polyolefin zugemischt werden kann. Die metallische Substanz kann Na oder Zn sein, wobei Zn-salze bevorzugt werden.

Eine wichtige Eigenschaft des lonomeren-Polymeren ist dessen hoher Schmelzindex, der in einem Bereich zwischen 12 und 20, vorzugsweise in einem Bereich zwischen 13 und 15 g/10 min liegen sollte, so daß die Folie bei relativ niedrigen Temperaturen gesiegelt werden kann. Diese Temperatureigenschaften sind bei der MAP-Technologie hilfreich, um zu vermeiden, daß hohe Siegeltemperaturen das Füllgut schädigen.

Die gesamte Dicke der Schichten (d), (e) und (f) sollte zwischen 10 und 70 µm, vorzugsweise zwischen 25 und 55 µm betragen.

Die Siegelschicht der Folie kann die üblichen Gleit- und Antiblockmittel wie z.B. Erucasäureamid, Polyalkylsiloxan wie z.B. Polymethylsiloxan und Siliziumdioxid enthalten. Als weitere Additive können alle oder einzelne Schichten Stabilisatoren der bekannten Art enthalten.

Die erfindungsgemäße Mehrschichtenbarrierefolie wird hergestellt, in dem die Trägerschicht (a) mit SiOₓ in einer Vakuumkammer mittels eines chemischen Beschichtungsprozesses (CVD-Technologie) in einem Plasma beschichtet wird. Die Schichten (f) und gegebenenfalls (d) und (e) werden in einem üblichen Blasextrusionsverfahren hergestellt und dann durch eine Haftvermittlerschicht (C) mit der beschichteten Trägerschicht verbunden.

Mit der erfindungsgemäßen Folienstruktur wird eine Mehrschichtenbarrierefolie zur Verfügung gestellt, die nicht nur über eine excellente Transparenz ohne Gelbstich, sondern auch über eine sehr gute Siegelbarkeit, einen hervorragende Bruchfestigkeit und eine excellente Reißfestigkeit verfügt.

Darüberhinaus war es überraschend, daß die erfindungsgemäße Folie auf horizontalen Schlauchbeutelmaschinen zu Verpackungen verarbeitet werden kann, ohne daß die Sperrschicht beschädigt wird.

Ein weiter Gegenstand der Erfindung ist daher die Verwendung der erfindungsgemäßen Mehrschichtenbarrierefolie als Verpackungsmaterial auf horizontalen Schlauchbeutelmaschinen, um Lebensmittel, speziell verderbliche Lebensmittel wie Frischfleisch, Schinken, Wurst und Brot zu verpacken. Wurst oder Brot sind bevorzugte Verpackunsgüter.
Während des Verpackungsprozesses wird die erfindungsgemäße Folie zu einer Schlauch geformt, in den die zu verpackenden Güter unter Austausch der Atmosphäre durch ein Inertgas eingefüllt werden. Danach wird der Schlauch an drei Seiten versiegelt.

Bedingt durch die erstaunliche Bruch- und Reißfestigkeit der erfindungsgemäßen Folie können die Nähte der Verpackung als Aufhängevorrichtung für die verpackten Waren eingesetzt werden. Diese wird dadurch erreicht, daß eine Naht so breit gemacht wird, daß ein Loch mit einem Durchmesser zwischen 0,5 und 3 cm in diese Naht gestanzt wird. Dieses Loch kann dann als Aufhängevorrichtung für die verpackten Lebensmittel eingesetzt werden.

### Beispiele:

### Beispiel 1:

Eine 18 µm dicke Polyamid-6-Trägerschicht wird in einer Vakuumkammer mittels der CVD-Technolgie mit SiOₓ beschichtet.

In einem separaten Prozeß werden die Schichten (d), (e) und (f) anhand eines üblichen Blasfolienextrusionsverfahren hergestellt, wobei:
Schicht (d) eine 20 µm dicke LDPE-Schicht mit einem Schmelzindex von 2g/10 min und einer Dichte von 0,9225 g/cm³ ist,
Schicht (e) eine 10 µm dicke Schicht aus mit Maleinsäureanhydrid gepfropftem Polyethylen ist und
Schicht (f) eine 10 µm dicke lonomer-Polymer-Schicht mit einem Schmelzindex von 12g/10 min ist, die Zn als Metalverbindung enthält

Der geblasene Film wird in einem separaten Verfahrensschritt mit der mit SiOₓ beschichten Trägerschicht zusammenlaminiert, wobei als Kaschierklebstoff ein lösemittelfreier auf Polyurethan basierender Zweikomponentenkleber verwendet worden ist. Die Auftragungsmenge des Kaschierklebstoffs beträgt 1,4 g/m² und was einer Dicke der Haftvermittlerschicht von ca. 2 µm entspricht

### Vergleichsbeispiel 1:

Eine Mehrschichtenfolie mit dem Schichtenaufbau ABACDE wird durch Co-Extrusion hergestellt, wobei die Schichten DE geblasene und die Schichten ABA gegossene Schichten sind und:
Schicht (A) aus 10 µm dickem Polyamid-6 besteht,
Schicht (B) eine 5 µm dicke Ethylenvinylalkohol (EVOH) Schicht ist
Schicht (C) ein lösemittelfreier auf Polyurethan basierender Zweikomponentenkleber ist und die Auftragungsmenge des Zweikomponentenklebers 5,0 g/m² beträgt,
Schicht (D) aus 20 µm dickem mit Malein-Säureanhydrid gepfropftemPolyethylen ist und
Schicht (E) aus einer 10 µm dicken lonomer-Polymer-Schicht mit Zn als metallischer Verbindung und einem Schmelzindex von 10g/10 min ist.

Beide Folien (Beispiel 1 und Vergleichsbeispiel 1) wurden auf einer Schlauchbeutelmaschine vom Typ llapack Delta mit einer Geschwindigkeit von 10m/min (Foliengeschwindigkeit) verarbeitet. Die Verpackungen haben ein Loch im Siegelnahtbereich mit einem Durchmesser von 20 mm, an dem die Verpackung aufgehängt werden kann.

Um die Reißfestigkeit beider Folien zu untersuchen, wurden die Verpackungen jeweils an einer 12 mm starken Metallstange aufgehängt. Danach wurde an das untere Ende der Verpackungen jeweils ein Gewicht von 4 kg angeklemmt und eine Zeitmessung gestartet. Ein zusätzliches Gewicht von 500 g wurde jeweils in Intervallen von einer Minute angehängt bis das Loch in dem Siegelnahtbereich ausriß. Das höchste Gesamtgewicht mit dem die Verpackung eine Minute lang belastet werden konnte wurde notiert. Die Ergebnisse des Versuchs sind in Tabelle 1 zusammengefaßt.

Darüberhinaus wurde noch bei beiden Folien die Sauerstoffdurchlässigkeit gemäß der ASTM D 3985-81, 23 °C, 50% r.h. Vorschrift bestimmt. Auch diese Ergebnisse sind in Tabelle 1 zusammengefaßt.

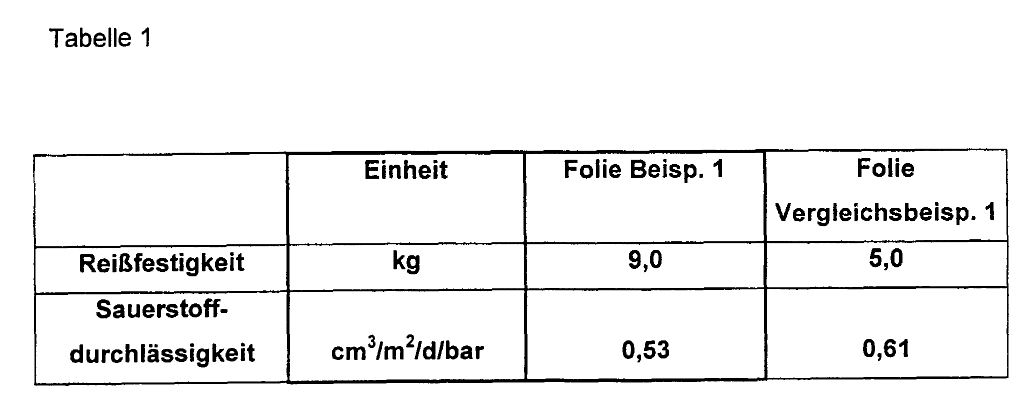

Es zeigt sich deutlich, daß die Folie gemäß Beispiel 1 gegenüber der Folie gemäß Vergleichsbeispiel 1 in allen Belangen bessere Resultate aufweist.

## Patentansprüche

1. Eine siegelbare, flexible und transparente Mehrschichtenbarrierefolie enthaltend die folgende Sequenz von Schichten:
a) eine Trägerschicht aus nicht orientiertem Polyamid,
b) eine Sperrschicht aus einem Halbmetalloxid,
c) eine Haftvermittlerschicht,
d) eine Schicht aus Polyethylen niederer Dichte (LDPE),
e) eine Haftvermittlerschicht,
f) eine Siegelschicht aus einem Ionomer-Polymeren,
wobei die Schichten (d) und (e) gegebenenfalls vorliegen können.

2. Eine Mehrschichtenbarrierefolie gemäß Anspruch 1, **dadurch gekennzeichnet, daß** als Polyamid Polyamid-6 oder Polyamid-6,6verwendet wird.

3. Eine Mehrschichtenbarrierefolie gemäß Anspruch 1 oder 2, **dadurch gekennzeichnet, daß** das Halbmetalloxid ein SiOₓ ist.

4. Eine Mehrschichtenbarrierefolie gemäß Anspruch 3, **dadurch gekennzeichnet, daß** x eine Zahl zwischen 1,2 und 2,0 ist.

5. Eine Mehrschichtenbarrierefolie gemäß den Ansprüchen 1-4, **dadurch gekennzeichnet, daß** die Haftvermittlerschicht (c) lösemittelfrei ist.

6. Eine Mehrschichtenbarrierefolie gemäß den Ansprüchen 1-5, **dadurch gekennzeichnet, daß** die Haftvermittlerschicht (e) aus einem Maleinsäureanhydrid gepfropftem Polyethylen besteht.

7. Eine Mehrschichtenbarrierefolie gemäß den Ansprüchen 1-6, **dadurch gekennzeichnet, daß** das lonomer-Polymer ein Zn-Salz beinhaltet und einen Schmelzindex zwischen 12 und 20, vorzugsweise zwischen 13 und 15 g/10 min hat.

8. Eine Mehrschichtenbarrierefolie gemäß den Ansprüchen 1-7, **dadurch gekennzeichnet, daß** die Schicht (b) eine Dicke zwischen 10 und 50 nm hat.

9. Eine Mehrschichtenbarrierefolie gemäß den Ansprüchen 1-8, **dadurch gekennzeichnet, daß** die Schichten (a) und (b) gemeinsam eine Dicke zwischen 10 und 30 µm, vorzugsweise zwischen 15 und 20 µm haben.

10. Eine Mehrschichtenbarrierefolie gemäß den Ansprüchen 1-9, **dadurch gekennzeichnet, daß** die Schichten (c), (d), (e) und (f) gemeinsam eine Dicke zwischen 10 und 70 µm, vorzugsweise zwischen 25 und 55 µm haben.

11. Verpackungen aus einer Mehrschichtenbarrierefolie gemäß den Ansprüchen 1-10 für Lebensmittel, vorzugsweise für Frischfleisch, Schinken, Wurst oder Brot.

12. Verfahren zum Verpacken von verderblichen Lebensmitteln, vorzugsweise Frischfleisch, Schinken, Wurst und Brot in einer Mehrschichtenbarrierefolie gemäß den Ansprüchen 1-10 auf einer horizontale Schlauchbeutelmaschine, **dadurch gekennzeichnet, daß** die Folie zu einem Schlauch geformt, mit dem zu verpackenden Gütern unter Austausch der Atmosphäre gegen ein Inertgas gefüllt und dann an drei Seiten versiegelt wird.

13. Verfahren gemäß Anspruch 12, **dadurch gekennzeichnet, daß** eines der Versiegelungsnähte soweit verbreitert wird, daß ein Loch mit einem Durchmesser zwischen 0,5 und 3 cm hineingestanzt werden kann.

14. Verfahren zur Herstellung der Mehrschichtenbarrierefolie gemäß den Ansprüchen 1-10, **dadurch gekennzeichnet, daß**:
- die Sperrschicht (b) gemäß einer Vakuum Plasma Technologie auf die Trägerschicht (a) aufgebracht wird, ..
- die Schichten (f) und gegebenenfalls (d) und (e) auf einem Folienblasextruder als eine 1-3 schichtige extrudierte Folie hergestellt werden und
- die beschichtete Trägerschicht und die 1-3 schichtige extrudierte Schlauchfolie mit einer vorzugsweise lösemittelfreien Haftvermittlerschicht (c) miteinander laminiert werden.

## Claims

1. A sealable, flexible, transparent multilayer barrier film, comprising the following sequence of layers:
a) a backing layer made of a non-oriented polyamide,
b) a barrier layer made of a semimetal oxide,
c) an adhesion-promoting layer,
d) a layer made of low density polyethylene (LDPE),
e) an adhesion-promoting layer,
f) a sealing layer made of an ionomeric polymer,
the presence of layers (d) and (e) being optional.

2. The multilayer barrier film according to claim 1, **characterized in that** polyamide 6 or polyamide 6,6 is used as polyamide.

3. The multilayer barrier film according to claim 1 or 2, **characterized in that** the semimetal oxide is SiOₓ.

4. The multilayer barrier film according to claim 3, **characterized in that** x is a number between 1.2 and 2.0.

5. The multilayer barrier film according to claims 1-4, **characterized in that** the adhesion-promoting layer (c) is free of solvent.

6. The multilayer barrier film according to claims 1-5, **characterized in that** the adhesion-promoting layer (e) is comprised of a polyethylene grafted with maleic anhydride.

7. The multilayer barrier film according to claims 1-6, **characterized in that** the ionomeric polymer includes a Zn salt and has a melt index between 12 and 20, preferably between 13 and 15 g/10 min.

8. The multilayer barrier film according to claims 1-7, **characterized in that** layer (b) has a thickness between 10 and 50 nm.

9. The multilayer barrier film according to claims 1-8, **characterized in that** the layers (a) and (b) have a combined thickness between 10 and 30 µm, preferably between 15 and 20 µm.

10. The multilayer barrier film according to claims 1-9, **characterized in that** the layers (c), (d), (e), and (f) have a combined thickness between 10 and 70 µm, preferably between 25 and 55 µm.

11. Packages made of a multilayer barrier film according to claims 1-10 used for foodstuffs, especially fresh meat, ham, sausages, or bread.

12. A process for packaging perishable foodstuffs, particularly fresh meat, ham, sausages, and bread in a multilayer barrier film according to claims 1-10 on a horizontal tubular bag machine, **characterized in that** the film is formed into a tube, filled with the goods to be packaged while replacing the atmosphere by an inert gas, and sealed across three sides.

13. The process according to claim 12, **characterized in that** one of the sealed seams is widened such that a hole between 0.5 and 3 cm in diameter can be punched therein.

14. A process for producing the multilayer barrier film according to claims 1-10, **characterized in that**:
- the barrier layer (b) is coated onto the backing film (a) using a vacuum plasma technology,
- the layers (f) and optionally (d) and (e) are produced on a film blowing extruder as a 1- to 3-layered extruded film, and
- the coated backing layer and the 1- to 3-layered extruded tubular film are laminated together using a preferably solvent-free adhesion-promoting layer (c) .

## Revendications

1. Feuille d'arrêt multicouches scellable, flexible et transparente, comportant la séquence suivante de couches :
a) une couche de support en polyamide non orienté
b) une couche d'arrêt en un oxyde de demi-métal
c) une couche d'agent adhésif
d) une couche en polyéthylène basse densité (LDPE)
e) une couche d'agent adhésif
f) une couche de scellage en un ionomère-polymère,
dans lequel les couches (d) et (e) peuvent éventuellement être présentes.

2. Feuille d'arrêt multicouches d'après la revendication 1, **caractérisée en ce que** le polyamide utilisé est du polyamide-6 ou du polyamide-6,6.

3. Feuille d'arrêt multicouches d'après la revendication 1 ou 2, **caractérisée en ce que** l'oxyde de demi-métal est un SiOₓ.

4. Feuille d'arrêt multicouches d'après la revendication 3, **caractérisée en ce que** x est un nombre compris entre 1,2 et 2,0.

5. Feuille d'arrêt multicouches d'après les revendications 1-4, **caractérisée en ce que** la couche d'agent adhésif (c) ne contient pas de solvant.

6. Feuille d'arrêt multicouches d'après les revendications 1-5, **caractérisée en ce que** la couche d'agent adhésif (e) est composée d'un polyéthylène greffé à de l'anhydride d'acide maléïque.

7. Feuille d'arrêt multicouches d'après les revendications 1-6 ,**caractérisée en ce que** le ionomère-polymère contient un sel de Zn et a un indice de fusion compris entre 12 et 20, de préférence entre 13 et 15 g/10 min.

8. Feuille d'arrêt multicouches d'après les revendications 1-7, **caractérisée en ce que** la couche (b) a une épaisseur comprise entre 10 et 50 nm.

9. Feuille d'arrêt multicouches d'après les revendications 1-8, **caractérisée en ce que** les couches (a) et (b) ont une épaisseur commune comprise entre 10 et 30 µm, de préférence entre 15 et 20 µm.

10. Feuille d'arrêt multicouches d'après les revendications 1-9, **caractérisée en ce que** les couches (c), (d), (e) et (f) ont une épaisseur commune comprise entre 10 et 70 µm, de préférence entre 25 et 55 µm.

11. Emballages composés d'une feuille d'arrêt multicouches d'après les revendications 1-10 pour les denrées alimentaires, particulièrement pour la viande fraîche, le jambon, le saucisson et le pain.

12. Procédé d'emballage de denrées alimentaires périssables, de préférence de viande fraîche, de jambon, de saucisson et de pain dans une feuille d'arrêt multicouches d'après les revendications 1-10 sur une ensacheuse horizontale, **caractérisé en ce que** la feuille est moulée en un boyau, qui est rempli avec les marchandises à emballer, en remplaçant l'atmosphère par un gaz inerte, et qui est ensuite scellé sur trois côtés.

13. Procédé d'après la revendication 12, **caractérisé en ce qu'**un des joints de scellage est élargi de telle sorte qu'on peut percer un trou ayant un diamètre compris entre 0,5 et 3 cm.

14. Procédé de fabrication de la feuille d'arrêt multicouches d'après les revendications 1-10, **caractérisé en ce que** :
- la couche d'arrêt (b) est appliquée sur la couche de support (a) selon une technique de plasma sous vide;
- les couches (f) et, le cas échéant, (d) et (e) sont fabriquées dans une machine d'extrusion/soufflage de feuilles en formant une feuille extrudée de 1 à 3 couches, et
- la couche de support et la feuille en gaine extrudée comportant de 1 à 3 couches sont stratifiées l'une avec l'autre avec une couche d'agent adhésif (c) ne comportant pas, de préférence, de solvant.
